(19) Europäisches Patentamt / European Patent Office / Office européen des brevets

(11) **EP 4 578 279 A1**

(12) **EUROPÄISCHE PATENTANMELDUNG**

(43) Veröffentlichungstag:
**02.07.2025 Patentblatt 2025/27**

(21) Anmeldenummer: **24401027.8**

(22) Anmeldetag: **13.12.2024**

(51) Internationale Patentklassifikation (IPC):
**A01M 7/00** (2006.01)

(52) Gemeinsame Patentklassifikation (CPC):
**A01M 7/0089; A01C 23/007; B05B 12/085**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **22.12.2023 DE 102023136461**

(71) Anmelder: **Amazonen-Werke H. Dreyer SE & Co. KG**
**49205 Hasbergen (DE)**

(72) Erfinder: **Große Prues, Frank**
**49205 Hasbergen (DE)**

(54) **VERFAHREN UND DATENVERARBEITUNGSSYSTEM ZUM ERMITTELN EINES GEEIGNETEN FAHRGESCHWINDIGKEITSBEREICHS**

(57) Die Erfindung betrifft ein Verfahren zum Ermitteln eines geeigneten Fahrgeschwindigkeitsbereichs ($v_{opt}$) einer landwirtschaftlichen Ausbringmaschine für einen Ausbringvorgang, bei welchem eine von einer Fördereinrichtung der Ausbringmaschine maschineninitern geförderte Ausbringflüssigkeit auf eine landwirtschaftliche Nutzfläche ausgebacht wird, wobei eine elektronische Recheneinheit den geeigneten Fahrgeschwindigkeitsbereich ($v_{opt}$) berechnet.

Fig.1

**EP 4 578 279 A1**

**Beschreibung**

Die Erfindung betrifft ein Verfahren zum Ermitteln eines geeigneten Fahrgeschwindigkeitsbereichs einer landwirtschaftlichen Ausbringmaschine nach dem Oberbegriff des Patentanspruchs 1 und ein Datenverarbeitungssystem zum Ermitteln eines geeigneten Fahrgeschwindigkeitsbereichs einer landwirtschaftlichen Ausbringmaschine nach dem Oberbegriff des Patentanspruchs 10.

Beim Ausbringen einer Ausbringflüssigkeit auf eine landwirtschaftliche Nutzfläche wird der geeignete Fahrgeschwindigkeitsbereich von einer Vielzahl von Komponenten und Maschinenfunktionen beeinflusst. Beispielsweise kann die Fahrgeschwindigkeit von der Antriebsleistung eines Zugfahrzeugs und/oder von Bodenverhältnissen abhängig sein. Darüber hinaus kann die Ausbringmaschine den geeigneten Fahrgeschwindigkeitsbereich begrenzen, beispielsweise durch einen Düsen- und/oder Leitungsquerschnitt der Ausbringmaschine oder durch die zu berücksichtigenden Reaktionszeiten des Steuerungssystems der Ausbringmaschine.

Trotz anhaltender Bestrebungen, den geeigneten Fahrgeschwindigkeitsbereich einer landwirtschaftlichen Ausbringmaschine für einen Ausbringvorgang möglichst präzise bestimmen zu können, besteht in diesem Zusammenhang noch ein erhebliches Verbesserungspotenzial. In einer Vielzahl von Ausbringszenarien können maximale Fahrgeschwindigkeiten von ermittelten Fahrgeschwindigkeitsbereichen häufig nicht ohne Beeinträchtigung des Ausbringergebnisses umgesetzt werden.

Die der Erfindung zugrunde liegende Aufgabe besteht somit darin, die Genauigkeit bei der Ermittlung eines geeigneten Fahrgeschwindigkeitsbereichs einer landwirtschaftlichen Ausbringmaschine für einen Ausbringvorgang zu erhöhen.

Die Aufgabe wird gelöst durch ein Verfahren der eingangs genannten Art, wobei die elektronische Recheneinheit im Rahmen des erfindungsgemäßen Verfahrens beim Berechnen des geeigneten Fahrgeschwindigkeitsbereichs die Fördereigenschaften der Fördereinrichtung berücksichtigt.

Mittels der Fördereinrichtung der Ausbringmaschine wird die Ausbringflüssigkeit maschinenintern gefördert, um diese auf die landwirtschaftliche Nutzfläche ausbringen zu können. Die Fördereinrichtung kann beispielsweise eine Pumpe sein.

Die elektronische Recheneinheit berechnet vorzugsweise eine minimale Fahrgeschwindigkeit des geeigneten Fahrgeschwindigkeitsbereichs und eine maximale Fahrgeschwindigkeit des geeigneten Fahrgeschwindigkeitsbereichs. Vorzugsweise berücksichtigt die elektronische Recheneinheit die Fördereigenschaften der Fördereinrichtung beim Berechnen der maximalen Fahrgeschwindigkeit des geeigneten Fahrgeschwindigkeitsbereichs. Das Berechnen des geeigneten Fahrgeschwindigkeitsbereichs kann unter Nutzung von künstlicher Intelligenz erfolgen.

In einer bevorzugten Ausführungsform des erfindungsgemäßen Verfahrens berücksichtigt die elektronische Recheneinheit beim Berechnen des geeigneten Fahrgeschwindigkeitsbereichs den maximalen Fördervolumenstrom der Fördereinrichtung. Der maximale Fördervolumenstrom der Fördereinrichtung kann durch die Förderleistung der Fördereinrichtung begrenzt sein. Der maximale Fördervolumenstrom wird vorzugsweise bei der Ermittlung der maximalen Fahrgeschwindigkeit des Fahrgeschwindigkeitsbereichs berücksichtigt.

In einer anderen bevorzugten Ausführungsform des erfindungsgemäßen Verfahrens ermittelt die elektronische Recheneinheit den maximalen Fördervolumenstrom der Fördereinrichtung während des Betriebs der landwirtschaftlichen Ausbringmaschine. Alternativ oder zusätzlich überprüft die elektronische Recheneinheit einen das maximale Fördervolumen der Fördereinrichtung betreffenden Parameter während des Betriebs der landwirtschaftlichen Ausbringmaschine und/oder aktualisiert diesen Parameter. Das Ermitteln des maximalen Fördervolumenstroms der Fördereinrichtung kann unter Nutzung von künstlicher Intelligenz erfolgen. Beispielsweise wird bei maximaler Maschinenauslastung und Nenndrehzahl der Fördereinrichtung der maximale Fördervolumenstrom überprüft, sodass im Bedarfsfall ein hinterlegter Wert korrigiert werden kann. Später wird der ermittelte Wert des maximalen Fördervolumenstroms dann für die Ermittlung der maximalen Fahrgeschwindigkeit verwendet. Wenn die Ausbringmaschine nicht bei maximaler Maschinenauslastung betrieben wird, kann der aktuelle Ausbringvolumenstrom und der aktuelle Bypassvolumenstrom zur Ermittlung des maximalen Fördervolumenstroms der Fördereinrichtung erfasst werden.

Es ist darüber hinaus ein erfindungsgemäßes Verfahren bevorzugt, bei welchem die elektronische Recheneinheit den maximalen Fördervolumenstrom der Fördereinrichtung unter Berücksichtigung einer Druck- und Durchflusskennlinie berechnet. Durch die Berücksichtigung einer Druck- und Durchflusskennlinie erfolgt eine druckspezifische Durchflusskorrektur. Diese ist insbesondere dann relevant, wenn der Fördervolumenstrom der Fördereinrichtung vom Gegendruck abhängig ist. Bei Kolbenpumpen ist der Fördervolumenstrom beispielsweise nahezu unabhängig vom Gegendruck. Bei Kreiselpumpen ist der Fördervolumenstrom jedoch stark abhängig vom Gegendruck, sodass die Berücksichtigung einer Druck- und Durchflusskennlinie zu einer erheblichen Genauigkeitssteigerung bei der Berechnung des geeigneten Fahrgeschwindigkeitsbereichs führt. Damit kurzfristige Signalausreißer keinen Einfluss auf die ermittelten Werte haben, können die Signale gefiltert, insbesondere tiefpassgefiltert, werden. Beispielsweise wird ein PT1-Filter und/oder ein Kalman-Filter eingesetzt.

Es ist darüber hinaus ein erfindungsgemäßes Verfahren bevorzugt, bei welchem die elektronische Recheneinheit beim Berechnen des geeigneten Fahrgeschwindigkeitsbereichs einen Istdruck der Ausbringflüssigkeit und/oder einen Solldruck der Ausbringflüssigkeit berücksichtigt. Der Istdruck der Ausbringflüssigkeit kann beispielsweise für die Berechnung des geeigneten Fahrgeschwindigkeitsbereichs für die aktuelle Ausbringsituation berücksichtigt werden. Der Solldruck der Ausbringflüssigkeit kann beispielsweise bei der Berechnung des geeigneten Fahrgeschwindigkeitsbereichs für eine beabsichtigte beziehungsweise anstehende Ausbringsituation berücksichtigt werden. Der von der elektronischen Recheneinheit beim Berechnen des geeigneten Fahrgeschwindigkeitsbereichs berücksichtigte maximale Fördervolumenstrom der Fördereinrichtung betrifft also vorzugsweise den maximalen Fördervolumenstrom der Fördereinrichtung bei einem Istdruck der Ausbringflüssigkeit und/oder bei einem Solldruck der Ausbringflüssigkeit.

In einer anderen bevorzugten Ausführungsform des erfindungsgemäßen Verfahrens umfasst die Ausbringmaschine mehrere Ausbringelemente mit einer minimalen Ausbringmenge und einer maximalen Ausbringmenge. Die elektronische Recheneinheit berücksichtigt beim Berechnen des geeigneten Fahrgeschwindigkeitsbereichs vorzugsweise die minimale Ausbringmenge und die maximale Ausbringmenge der Ausbringelemente. Die Ausbringelemente können beispielsweise Ventile, insbesondere pulsweitenmoduliert gesteuerte Ventile, sein.

In einer anderen bevorzugten Ausführungsform des erfindungsgemäßen Verfahrens umfasst die Ausbringmaschine pulsweitenmoduliert gesteuerte Ventile für die Ausbringmengensteuerung. Die elektronische Recheneinheit berücksichtigt beim Berechnen des geeigneten Fahrgeschwindigkeitsbereichs vorzugsweise einen Mindesttastgrad für die Ventile. Der Mindesttastgrad kann beispielsweise von einem Bediener manuell vorgegeben werden. Alternativ kann der Mindesttastgrad abhängig von der Fahrgeschwindigkeit beziehungsweise der Düsengeschwindigkeit von der Recheneinheit berechnet werden. Bei geringen Fahrgeschwindigkeiten kann der Tastgrad stärker reduziert werden als bei hohen Fahrgeschwindigkeiten. Die Berücksichtigung eines Mindesttastgrads ist erforderlich, da bei einem zu geringen Tastgrad, beispielsweise < 25%, der Anteil der Varianz der Öffnungs- und Schließzeiten der Ventile zu groß wird, sodass die Streuung der Ventile untereinander nicht mehr gering genug ist. Über die Fahrgeschwindigkeit und die Frequenz kann die maximale Lücke zwischen zwei Pulsen ausgerechnet werden. Während der Lücke zwischen zwei Pulsen erfolgt keine Ausbringung von Ausbringflüssigkeit. Bei 20 Hz hat ein Durchlauf beispielsweise eine Dauer von 50 ms, sodass das Ventil bei einem Tastgrad von 30% 15 ms geöffnet und 35 ms geschlossen ist. Bei einer Fahrgeschwindigkeit von 12 km/h ergibt sich eine Lücke von 0,12 m. Zur Gewährleistung eines beabsichtigten Ausbringergebnisses darf diese Lücke je nach Ausbringvorgang einen Grenzwert nicht überschreiten. Abhängig von der Anwendung kann diese Lücke möglicherweise zu groß sein, sodass der Mindesttastgrad erhöht werden muss. Der Mindesttastgrad ist ungleich 0. Der Mindesttastgrad wird vorzugsweise beim Berechnen der minimalen Fahrgeschwindigkeit des Fahrgeschwindigkeitsbereichs berücksichtigt. Beim Berechnen der minimalen Fahrgeschwindigkeit des Fahrgeschwindigkeitsbereichs berücksichtigt die elektronische Recheneinheit vorzugsweise einen Fördervolumenstrom einer Düse bei einem Solldruck und einem Tastgrad von 100% ($Q_{Düse,p,soll,DC100}$), beispielsweise in [l/min]. Beim Berechnen der minimalen Fahrgeschwindigkeit des Fahrgeschwindigkeitsbereichs berücksichtigt die elektronische Recheneinheit vorzugsweise den Mindesttastgrad $DC_{min}$, beispielweise als Prozentangabe. Beim Berechnen der minimalen Fahrgeschwindigkeit des Fahrgeschwindigkeitsbereichs berücksichtigt die elektronische Recheneinheit vorzugsweise die Sollausbringmenge ($V_{soll}$), beispielsweise in [l/ha]. Beim Berechnen der minimalen Fahrgeschwindigkeit des Fahrgeschwindigkeitsbereichs berücksichtigt die elektronische Recheneinheit vorzugsweise die Arbeitsbreite pro Düse ($AB_{Düse}$), beispielsweise in [m]. Die elektronische Recheneinheit berechnet die minimale Fahrgeschwindigkeit des Fahrgeschwindigkeitsbereichs vorzugsweise anhand der nachfolgenden Formel:

$$v_{min} = \frac{Q_{Düse,p,soll,DC100} * DC_{min}}{V_{soll} * AB_{Düse}}$$

In anderen Ausführungsformen können weitere Faktoren oder Berechnungsterme berücksichtigt werden, um die Genauigkeit bei der Berechnung der minimalen Fahrgeschwindigkeit des geeigneten Fahrgeschwindigkeitsbereichs weiter zu erhöhen.

In einer bevorzugten Ausführungsform des erfindungsgemäßen Verfahrens berücksichtigt die elektronische Recheneinheit beim Berechnen des geeigneten Fahrgeschwindigkeitsbereichs die Arbeitsbreite einer oder mehrerer Spritzdüsen der Ausbringmaschine und/oder die Gesamtarbeitsbreite der Ausbringmaschine. Vorzugsweise berücksichtigt die elektronische Recheneinheit, ob die Ausbringflüssigkeit über mehrere beabstandete und parallel zueinander verlaufende Flüssigkeitsbänder oder vollflächig auf die landwirtschaftliche Nutzfläche ausgebracht werden soll.

Es ist darüber hinaus ein erfindungsgemäßes Verfahren bevorzugt, bei welchem die elektronische Recheneinheit beim Berechnen des geeigneten Fahrgeschwindigkeitsbereichs einen von dem maximalen Einzeldüsenvolumenstrom abhängigen Volumenstromwert und einen von der maximalen Förderleistung der Fördereinrichtung abhängigen Volumenstromwert ($Q_{Förder,max}$) berücksichtigt. Der von dem maximalen Einzeldüsenvolumenstrom abhängige Volumenstromwert ($Q_{max,1}$) und der von der maximalen Förderleistung der Fördereinrichtung abhängige Volumenstromwert ($Q_{max,2}$) werden vorzugsweise beim Berechnen der maximalen Fahrgeschwindigkeit des Fahrgeschwindigkeitsbereichs berücksichtigt. Beim Berechnen der maximalen Fahrgeschwindigkeit des Fahrgeschwindigkeitsbereichs berücksichtigt die elektronische Recheneinheit vorzugsweise die Sollausbringmenge ($V_{soll}$), beispielsweise in [l/ha]. Beim Berechnen der maximalen Fahrgeschwindigkeit des Fahrgeschwindigkeitsbereichs berücksichtigt die elektronische Recheneinheit vorzugsweise die Arbeitsbreite pro Düse ($AB_{Düse}$), beispielsweise in [m]. Die elektronische Recheneinheit berechnet die maximale Fahrgeschwindigkeit des Fahrgeschwindigkeitsbereichs vorzugsweise anhand der nachfolgenden Formel:

$$v_{max} = \frac{Q_{max}}{V_{soll} * AB_{Düse}}$$

In anderen Ausführungsformen können weitere Faktoren oder Berechnungsterme berücksichtigt werden, um die Genauigkeit bei der Berechnung der maximalen Fahrgeschwindigkeit des geeigneten Fahrgeschwindigkeitsbereichs weiter zu erhöhen.

Zur Ermittlung von $Q_{max}$ wählt die elektronische Recheneinheit aus $Q_{max,1}$ und $Q_{max,2}$ den kleineren Wert aus. Die elektronische Recheneinheit berechnet $Q_{max,1}$ und $Q_{max,2}$ vorzugsweise anhand der nachfolgenden Formeln:

$$Q_{max,1} = Q_{Düse,p,soll,DC100} = \sqrt{\frac{Q_{Ref}^2 * p_{soll}}{p_{Ref}}}$$

$$Q_{max,2} = Q_{Förder,max} * \frac{AB_{Düse}}{AB_{Gesamt}}$$

$Q_{ref}$ entspricht einem manuell definierten oder vorgegebenen Volumenstromwert. $p_{ref}$ entspricht einem $Q_{ref}$ zugeordneten Druck. $p_{soll}$ entspricht einem manuell definierten oder vorgegebenen Solldruck.

Das erfindungsgemäße Verfahren wird ferner dadurch vorteilhaft weitergebildet, dass die elektronische Recheneinheit beim Berechnen des geeigneten Fahrgeschwindigkeitsbereichs eine voreingestellte oder vom Benutzer ausgewählte Tröpfchengrößenklasse berücksichtigt. Zur Umsetzung einer spezifischen Tröpfchengrößenklasse ist beispielsweise die Einhaltung eines spezifischen Drucks erforderlich. Durch die Einhaltung des für die beabsichtigte Tröpfchengrößenklasse erforderlichen Drucks kann es zur Beeinflussung der Förderleistung der Fördereinrichtung kommen. Dies kann einen Einfluss auf die maximale Fahrgeschwindigkeit des geeigneten Fahrgeschwindigkeitsbereichs haben.

Die der Erfindung zugrunde liegende Aufgabe wird ferner durch ein Datenverarbeitungssystem der eingangs genannten Art gelöst, wobei die elektronische Recheneinheit dazu eingerichtet ist, beim Berechnen des geeigneten Fahrgeschwindigkeitsbereichs die Fördereigenschaften der Fördereinrichtung zu berücksichtigen. Das Datenverarbeitungssystem kann ein Bedienterminal sein oder ein Bedienterminal umfassen. Das Datenverarbeitungssystem kann alternativ ein portables Mobilfunkgerät umfassen.

Das erfindungsgemäße Datenverarbeitungssystem wird ferner dadurch vorteilhaft weitergebildet, dass die elektronische Recheneinheit dazu eingerichtet ist, den geeigneten Fahrgeschwindigkeitsbereich mit einem Verfahren nach einem der vorstehenden Ausführungsformen zu ermitteln. Hinsichtlich der Vorteile und Modifikationen des erfindungsgemäßen Datenverarbeitungssystems wird somit auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:

Fig. 1 einen mittels des erfindungsgemäßen Verfahrens ermittelten geeigneten Fahrgeschwindigkeitsbereich;

Fig. 2 die beim Ermitteln der minimalen Fahrgeschwindigkeit des geeigneten Fahrgeschwindigkeitsbereichs berücksichtigen Parameter; und

Fig. 3 die beim Ermitteln der maximalen Fahrgeschwindigkeit des geeigneten Fahrgeschwindigkeitsbereichs berücksichtigen Parameter.

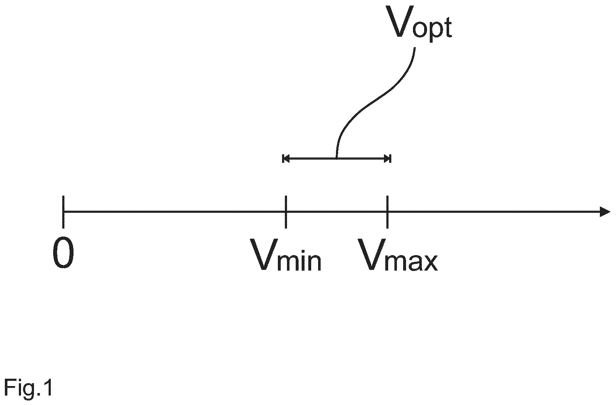

Die Fig. 1 zeigt eine Geschwindigkeitsanzeige, welche einen geeigneten Fahrgeschwindigkeitsbereich $v_{opt}$ einer landwirtschaftlichen Ausbringmaschine für einen Ausbringvorgang wiedergibt. Der geeignete Fahrgeschwindigkeitsbereich $v_{opt}$ bezieht sich auf einen Ausbringvorgang, bei welchem eine von einer Fördereinrichtung der Ausbringmaschine maschinenintern geförderte Ausbringflüssigkeit auf eine landwirtschaftliche Nutzfläche ausgebracht wird. Der geeignete Fahrgeschwindigkeitsbereich $v_{opt}$ wird von einer elektronischen Recheneinheit berechnet. Die elektronische Recheneinheit berechnet hierzu eine minimale Fahrgeschwindigkeit $v_{min}$ und eine maximale Fahrgeschwindigkeit $v_{max}$, wobei die minimale Fahrgeschwindigkeit $v_{min}$ und die maximale Fahrgeschwindigkeit $v_{max}$ die oberen und unteren Grenzwerte des geeigneten Fahrgeschwindigkeitsbereichs $v_{opt}$ darstellen.

Die Fördereinrichtung der Ausbringmaschine kann beispielsweise eine Pumpe sein, wobei die elektronische Recheneinheit beim Berechnen des geeigneten Fahrgeschwindigkeitsbereichs $v_{opt}$ die Fördereigenschaften der Förder-einrichtung berücksichtigt. Beim Berechnen des geeigneten Fahrgeschwindigkeitsbereichs $v_{opt}$ berücksichtigt die elektronische Recheneinheit den maximalen Fördervolumenstrom $Q_{Förder,max}$ der Fördereinrichtung.

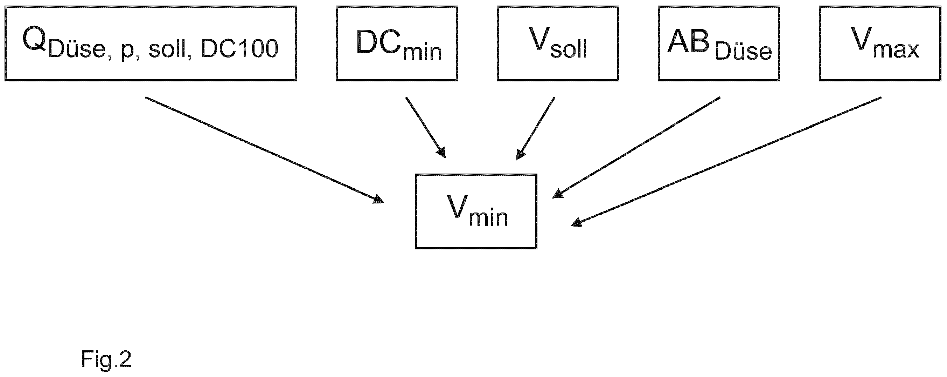

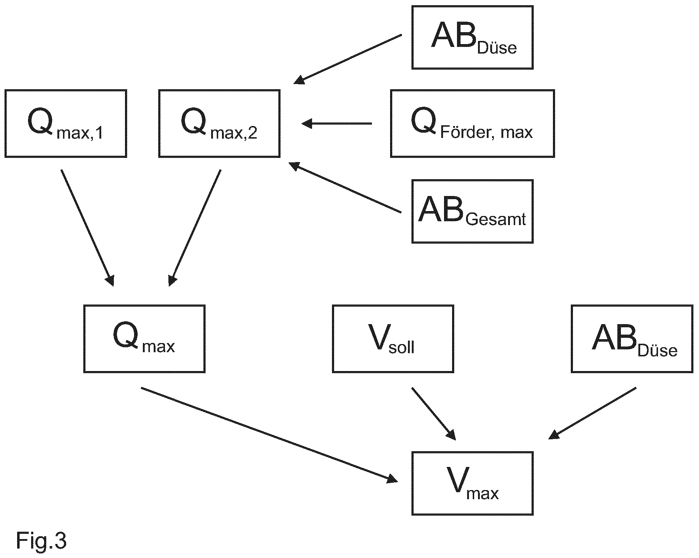

Die Fig. 2 und 3 zeigen die bei der Berechnung der minimalen Fahrgeschwindigkeit $v_{min}$ und der maximalen Fahrgeschwindigkeit $v_{max}$ von der elektronischen Recheneinheit berücksichtigten Parameter.

Wie in der Fig. 2 dargestellt, berücksichtigt die elektronische Recheneinheit beim Berechnen der minimalen Fahrgeschwindigkeit $v_{min}$ des Fahrgeschwindigkeitsbereichs $v_{opt}$ einen Fördervolumenstrom $Q_{Düse,p,soll,DC100}$. Der Fördervolumenstrom $Q_{Düse,p,soll,DC100}$ bezieht sich auf den Fördervolumenstrom einer Düse bei einem Solldruck und einem Tastgrad von 100%. Die Ausbringmaschine umfasst pulsweitenmoduliert gesteuerte Ventile für die Ausbringmengensteuerung, wobei die elektronische Recheneinheit beim Berechnen der minimalen Fahrgeschwindigkeit $v_{min}$ des geeigneten Fahrgeschwindigkeitsbereichs $v_{opt}$ ebenfalls einen Mindesttastgrad $DC_{min}$ für die Ventile berücksichtigt. Der Mindesttastgrad $DC_{min}$ kann vom Bediener manuell eingegeben werden oder von der Recheneinheit, beispielsweise in Abhängigkeit der Fahrgeschwindigkeit oder Düsengeschwindigkeit, berechnet werden.

Beim Berechnen der minimalen Fahrgeschwindigkeit $v_{min}$ des geeigneten Fahrgeschwindigkeitsbereichs $v_{opt}$ überprüft die elektronische Recheneinheit, ob die minimale Fahrgeschwindigkeit $v_{min}$ größer als die maximale Fahrge-schwindigkeit $v_{max}$ des geeigneten Fahrgeschwindigkeitsbereichs $v_{opt}$ ist.

Dies kann beispielsweise vorkommen, wenn die Förderleistung der Fördereinrichtung sehr gering ist und dadurch die maximale Fahrgeschwindigkeit $v_{max}$ des geeigneten Fahrgeschwindigkeitsbereichs $v_{opt}$ stark limitiert wird. In diesem Fall wird die minimale Fahrgeschwindigkeit $v_{min}$ durch die maximale Fahrgeschwindigkeit $v_{max}$ limitiert.

Beim Berechnen der minimalen Fahrgeschwindigkeit $v_{min}$ des geeigneten Fahrgeschwindigkeitsbereichs $v_{opt}$ berücksichtigt die elektronische Recheneinheit außerdem eine Sollausbringmenge $V_{soll}$. Darüber hinaus berücksichtigt die elektronische Recheneinheit die Arbeitsbreite pro Düse $AB_{Düse}$. Vorzugsweise berechnet die elektronische Rechen-einheit die minimale Fahrgeschwindigkeit $v_{min}$ des geeigneten Fahrgeschwindigkeitsbereichs $v_{opt}$ anhand der nach-folgenden Formel:

$$v_{min} = \frac{Q_{Düse,p,soll,DC100} * DC_{min}}{V_{soll} * AB_{Düse}}$$

Die minimale Fahrgeschwindigkeit $v_{min}$ des geeigneten Fahrgeschwindigkeitsbereichs $v_{opt}$ kann während des Betriebs unter Berücksichtigung der aktuellen Tastgrade von pulsweitenmoduliert gesteuerten Ventilen der Ausbringmaschine überprüft und angepasst werden. Die minimale Fahrgeschwindigkeit $v_{min}$ des geeigneten Fahrgeschwindig-keitsbereichs $v_{opt}$ kann sich bei einer Geradeausfahrt aufgrund einer geringen Abweichung der aktuellen Tastgrade an den Ventilen von der minimalen Fahrgeschwindigkeit $v_{min}$ des geeigneten Fahrgeschwindigkeitsbereichs $v_{opt}$ bei einer Kurvenfahrt unterscheiden, bei welcher die Abweichung der aktuellen Tastgrade an den Ventilen größer ist. Eine ähnliche Situation kann bei der Verwendung einer Applikationskarte auftreten, gemäß welcher entlang des Spritzgestänges verschiedene Ausbringmengen an Spritzflüssigkeit ausgebracht werden sollen. Umso größer der Unterschied zwischen dem aktuellen Minimaltastgrad und dem aktuellen Maximaltastgrad an den Ventilen ist, umso höher ist die minimale Fahrgeschwindigkeit $v_{min}$ des geeigneten Fahrgeschwindigkeitsbereichs $v_{opt}$. Die elektronische Recheneinheit berech-net die unter Berücksichtigung der aktuellen Tastgrade der pulsweitenmoduliert gesteuerten Ventilen der Ausbringmaschine überprüfte minimale Fahrgeschwindigkeit $v_{min,DC}$ beispielsweise anhand der folgenden Formel:

$$v_{min,DC} = v_{min} + v_{min} * \frac{DC_{max,akt} - DC_{min,akt}}{2}$$

In der Formel wird der aktuelle Maximaltastgrad an den Ventilen $DC_{max,akt}$ und der aktuelle Minimaltastgrad an den Ventilen $DC_{min,akt}$ berücksichtigt.

Aus der Fig. 3 ergibt sich, dass die elektronische Recheneinheit beim Berechnen der maximalen Fahrge-schwindigkeit $v_{max}$ des geeigneten Fahrgeschwindigkeitsbereichs $v_{opt}$ einen von dem maximalen Einzeldüsenvolumenstrom abhängigen Volumenstromwert $Q_{max,1}$ und einen von der maximalen Förderleistung der Fördereinrichtung abhängigen Volumenstromwert $Q_{max,2}$ berücksichtigt. Der von der maximalen Förderleistung der Fördereinrichtung abhängige Volumenstromwert $Q_{max,2}$ ist von dem maximalen Fördervolumenstrom $Q_{Förder,max}$ der Fördereinrichtung, der Einzeldüsenarbeitsbreite $AB_{Düse}$ und der Gesamtarbeitsbreite der Ausbringmaschine $AB_{Gesamt}$ abhängig und kann beispielsweise anhand der nachfolgenden Formel berechnet werden:

$$Q_{max,2} = Q_{Förder,max} * \frac{AB_{Düse}}{AB_{Gesamt}}$$

Die elektronische Recheneinheit wählt zur Ermittlung der maximalen Fahrgeschwindigkeit $v_{max}$ des geeigneten Fahrgeschwindigkeitsbereichs $v_{opt}$ aus den Werten $Q_{max,1}$ und $Q_{max,2}$ den kleineren Wert aus und definiert diesen als $Q_{max}$.

Unter Berücksichtigung der Sollausbringmenge $V_{soll}$ und der Arbeitsbreite pro Düse $AB_{Düse}$ berechnet die elektronische Recheneinheit dann die maximale Fahrgeschwindigkeit $v_{max}$ des geeigneten Fahrgeschwindigkeitsbereichs $v_{opt}$, beispielsweise anhand der nachfolgenden Formel:

$$v_{max} = \frac{Q_{max}}{V_{soll} * AB_{Düse}}$$

Die elektronische Recheneinheit kann beim Berechnen des geeigneten Fahrgeschwindigkeitsbereichs $v_{opt}$ ferner eine voreingestellte oder vom Benutzer ausgewählte Tröpfchengrößenklasse berücksichtigen. Die elektronische Recheneinheit kann den maximalen Fördervolumenstrom $Q_{Förder,max}$ der Fördereinrichtung während des Betriebs der landwirtschaftlichen Ausbringmaschine ermitteln oder einen den maximalen Fördervolumenstrom $Q_{förder,max}$ der Fördereinrichtung betreffenden Parameter während des Betriebs der landwirtschaftlichen Ausbringmaschine überprüfen und/oder aktualisieren. Abhängig von dem eingesetzten Fördereinrichtungstyp kann die elektronische Recheneinheit den maximalen Fördervolumenstrom $Q_{Förder,max}$ der Fördereinrichtung auch unter Berücksichtigung einer Druck- und Durchflusskennlinie berechnen.

Die maximale Fahrgeschwindigkeit $v_{max}$ des geeigneten Fahrgeschwindigkeitsbereichs $v_{opt}$ kann während des Betriebs unter Berücksichtigung der aktuellen Tastgrade von pulsweitenmoduliert gesteuerten Ventilen der Ausbringmaschine überprüft und angepasst werden. Die maximale Fahrgeschwindigkeit $v_{max}$ des geeigneten Fahrgeschwindigkeitsbereichs $v_{opt}$ kann sich bei einer Geradeausfahrt aufgrund einer geringen Abweichung der aktuellen Tastgrade an den Ventilen von der maximalen Fahrgeschwindigkeit $v_{max}$ des geeigneten Fahrgeschwindigkeitsbereichs $v_{opt}$ bei einer Kurvenfahrt unterscheiden, bei welcher die Abweichung der aktuellen Tastgrade an den Ventilen größer ist. Eine ähnliche Situation kann bei der Verwendung einer Applikationskarte auftreten, gemäß welcher entlang des Spritzgestänges verschiedene Ausbringmengen an Spritzflüssigkeit ausgebracht werden sollen. Umso größer der Unterschied zwischen dem Minimaltastgrad an den Ventilen und dem Maximaltastgrad an den Ventilen ist, umso niedriger ist die maximale Fahrgeschwindigkeit $v_{max}$ des geeigneten Fahrgeschwindigkeitsbereichs $v_{opt}$. Die elektronische Recheneinheit berechnet die unter Berücksichtigung der aktuellen Tastgrade der pulsweitenmoduliert gesteuerten Ventilen der Ausbringmaschine überprüfte maximale Fahrgeschwindigkeit $v_{max,DC}$ beispielsweise anhand der folgenden Formel:

$$v_{max,DC} = v_{max} - v_{max} * \frac{DC_{max,akt} - DC_{min,akt}}{2}$$

In der Formel wird der aktuelle Maximaltastgrad an den Ventilen $DC_{max,akt}$ und der aktuelle Minimaltastgrad an den Ventilen $DC_{min,akt}$ berücksichtigt.

<u>Bezugszeichen</u>

| | |
|---|---|
| $v_{opt}$ | Fahrgeschwindigkeitsbereich |
| $v_{min}$ | minimalen Fahrgeschwindigkeit |
| $v_{max}$ | maximale Fahrgeschwindigkeit |
| $Q_{Düse,p,soll,DC100}$ | Fördervolumenstrom |
| $Q_{Förder,max}$ | Fördervolumenstrom |
| $Q_{max}$ | Volumenstromwert |
| $Q_{max,1}$ | Volumenstromwert |
| $Q_{max,2}$ | Volumenstromwert |
| $DC_{min}$ | Mindesttastgrad |
| $V_{soll}$ | Sollausbringmenge |
| $AB_{Düse}$ | Arbeitsbreite pro Düse |
| $AB_{Gesamt}$ | Gesamtarbeitsbreite |

**Patentansprüche**

1. Verfahren zum Ermitteln eines geeigneten Fahrgeschwindigkeitsbereichs ($v_{opt}$) einer landwirtschaftlichen Ausbringmaschine für einen Ausbringvorgang, bei welchem eine von einer Fördereinrichtung der Ausbringmaschine maschinenintern geförderte Ausbringflüssigkeit auf eine landwirtschaftliche Nutzfläche ausgebacht wird,

   wobei eine elektronische Recheneinheit den geeigneten Fahrgeschwindigkeitsbereich ($v_{opt}$) berechnet, **dadurch gekennzeichnet, dass** die elektronische Recheneinheit beim Berechnen des geeigneten Fahrgeschwindigkeitsbereichs ($v_{opt}$) die Fördereigenschaften der Fördereinrichtung berücksichtigt.

2. Verfahren nach Anspruch 1, **dadurch gekennzeichnet, dass** die elektronische Recheneinheit beim Berechnen des geeigneten Fahrgeschwindigkeitsbereichs ($v_{opt}$) den maximalen Fördervolumenstrom ($Q_{Förder,max}$) der Fördereinrichtung berücksichtigt.

3. Verfahren nach Anspruch 2, **dadurch gekennzeichnet, dass** die elektronische Recheneinheit den maximalen Fördervolumenstrom ($Q_{Förder,max}$) der Fördereinrichtung während des Betriebs der landwirtschaftliche Ausbringmaschine ermittelt und/oder einen den maximale Fördervolumenstrom ($Q_{Förder,max}$) der Fördereinrichtung betreffenden Parameter während des Betriebs der landwirtschaftlichen Ausbringmaschine überprüft und/oder aktualisiert.

4. Verfahren nach Anspruch 2 oder 3, **dadurch gekennzeichnet, dass** die elektronische Recheneinheit den maximalen Fördervolumenstrom ($Q_{Förder,max}$) der Fördereinrichtung unter Berücksichtigung einer Druck- und Durchflusskennlinie berechnet.

5. Verfahren nach einem der vorstehenden Ansprüche, **dadurch gekennzeichnet, dass** die elektronische Recheneinheit beim Berechnen des geeigneten Fahrgeschwindigkeitsbereichs ($v_{opt}$) einen Istdruck der Ausbringflüssigkeit und/oder einen Solldruck der Ausbringflüssigkeit berücksichtigt.

6. Verfahren nach einem der vorstehenden Ansprüche, **dadurch gekennzeichnet, dass** die Ausbringmaschine pulsweitenmoduliert gesteuerte Ventile für die Ausbringmengensteuerung umfasst, wobei die elektronische Recheneinheit beim Berechnen des geeigneten Fahrgeschwindigkeitsbereichs ($v_{opt}$) einen Mindesttastgrad ($DC_{min}$) für die Ventile berücksichtigt.

7. Verfahren nach einem der vorstehenden Ansprüche, **dadurch gekennzeichnet, dass** die elektronische Recheneinheit beim Berechnen des geeigneten Fahrgeschwindigkeitsbereichs ($v_{opt}$) die Arbeitsbreite ($AB_{Düse}$) einer oder mehrerer Spritzdüsen der Ausbringmaschine und/oder die Gesamtarbeitsbreite der Ausbringmaschine berücksichtigt.

8. Verfahren nach einem der vorstehenden Ansprüche, **dadurch gekennzeichnet, dass** die elektronische Recheneinheit beim Berechnen des geeigneten Fahrgeschwindigkeitsbereichs ($v_{opt}$) einen von dem maximalen Einzeldüsenvolumenstrom abhängigen Volumenstromwert ($Q_{max,1}$) und einen von der maximalen Förderleistung der Fördereinrichtung abhängigen Volumenstromwert ($Q_{max,2}$) berücksichtigt.

9. Verfahren nach einem der vorstehenden Ansprüche, **dadurch gekennzeichnet, dass** die elektronische Recheneinheit beim Berechnen des geeigneten Fahrgeschwindigkeitsbereichs ($v_{opt}$) eine voreingestellte oder vom Benutzer ausgewählte Tröpfchengrößenklasse berücksichtigt.

10. Datenverarbeitungssystem zum Ermitteln eines geeigneten Fahrgeschwindigkeitsbereichs ($v_{opt}$) einer landwirtschaftlichen Ausbringmaschine für einen Ausbringvorgang, bei welchem eine von einer Fördereinrichtung der Ausbringmaschine maschinenintern geförderte Ausbringflüssigkeit auf eine landwirtschaftliche Nutzfläche ausgebacht wird, mit

    - einer elektronischen Recheneinheit, welche dazu eingerichtet ist, den geeigneten Fahrgeschwindigkeitsbereich ($v_{opt}$) zu berechnen,

    **dadurch gekennzeichnet, dass** die elektronische Recheneinheit dazu eingerichtet ist, beim Berechnen des ge-

eigneten Fahrgeschwindigkeitsbereichs ($v_{opt}$) die Fördereigenschaften der Fördereinrichtung zu berücksichtigen.

11. Datenverarbeitungssystem nach Anspruch 10,
    **dadurch gekennzeichnet, dass** die elektronische Recheneinheit dazu eingerichtet ist, den geeigneten Fahrgeschwindigkeitsbereich ($v_{opt}$) mit einem Verfahren nach einem der Ansprüche 1 bis 9 zu ermitteln.

$V_{opt}$

$0$  $V_{min}$  $V_{max}$

Fig.1

Fig.2

Fig.3

**EUROPÄISCHER RECHERCHENBERICHT**

Europäisches Patentamt
European Patent Office
Office européen des brevets

Nummer der Anmeldung

EP 24 40 1027

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2021 108730 A1 (AMAZONEN WERKE H DREYER SE & CO KG [DE]) 13. Oktober 2022 (2022-10-13) | 1,6,9-11 | INV. A01M7/00 |
| A | * Absatz [0001] * * Absatz [0003] * * Absatz [0024] * * Absatz [0028] - Absatz [0029] * * Absatz [0047] * * Absatz [0049] * * Abbildungen * - - - - - | 2-5,7,8 | |
| X | US 2022/202002 A1 (SCHMITZ LARS [NL] ET AL) 30. Juni 2022 (2022-06-30) | 1,5,7, 9-11 | |
| A | * Absatz [0002] * * Absatz [0013] * * Absatz [0019] * * Absatz [0023] * * Absatz [0026] - Absatz [0027] * * Absatz [0042] - Absatz [0044] * * Absatz [0047] * * Absatz [0051] * * Absatz [0053] * * Absatz [0063] * * Absatz [0079] - Absatz [0087] * * Absatz [0089] - Absatz [0091] * * Absatz [0093] * * Abbildungen * - - - - - | 2-4,6,8 | |

**RECHERCHIERTE SACHGEBIETE (IPC)**

A01M
B65D
A01C
B05B

Der vorliegende Recherchenbericht wurde für alle Patentansprüche erstellt

| Recherchenort | Abschlußdatum der Recherche | Prüfer |
|---|---|---|
| München | 13. Mai 2025 | Schlichting, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 40 1027

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-05-2025

| Im Recherchenbericht angeführtes Patentdokument | Datum der Veröffentlichung | Mitglied(er) der Patentfamilie | Datum der Veröffentlichung |
|---|---|---|---|
| DE 102021108730 A1 | 13-10-2022 | BR 112023020689 A2 | 12-12-2023 |
| | | CA 3215736 A1 | 13-10-2022 |
| | | DE 102021108730 A1 | 13-10-2022 |
| | | EP 4319550 A1 | 14-02-2024 |
| | | US 2024196878 A1 | 20-06-2024 |
| | | WO 2022214332 A1 | 13-10-2022 |
| US 2022202002 A1 | 30-06-2022 | CA 3133936 A1 | 03-12-2020 |
| | | EP 3796777 A1 | 31-03-2021 |
| | | US 2022202002 A1 | 30-06-2022 |
| | | WO 2020239771 A1 | 03-12-2020 |

EPO FORM P0461

Für nähere Einzelheiten zu diesem Anhang : siehe Amtsblatt des Europäischen Patentamts, Nr.12/82